(19) Europäisches Patentamt
European Patent Office
Office européen des brevets

(11) EP 0 673 950 B1

# (12) FASCICULE DE BREVET EUROPEEN

(45) Date de publication et mention de la délivrance du brevet:
**29.12.1997 Bulletin 1997/52**

(51) Int Cl.[6]: **C08F 10/00**, C08F 4/02, C08F 4/629

(21) Numéro de dépôt: **95400524.5**

(22) Date de dépôt: **13.03.1995**

(54) **Composante catalytique pour la polymérisation des oléfines obtenue par imprégnation d'un prépolymère par une solution d'une composante catalytique et polymère obtenue à partir de ladite composante catalytique**

Katalysatorkomponente zur Olefinpolymerisation, erhalten durch Impregnierung eines Prepolymeren mit einer Lösung einer Katalysator komponente und unter Verwendung dieser Katalysatorkomponente erhaltenes Polymer

Catalyst component for the polymerisation of olefins obtained by impregnation of a prepolymer with a solution of a catalytic component, and polymer obtained using said catalyst component

(84) Etats contractants désignés:
**AT BE DE ES FR GB IT NL SE**

(30) Priorité: **23.03.1994 FR 9403420**

(43) Date de publication de la demande:
**27.09.1995 Bulletin 1995/39**

(73) Titulaire: **ELF ATOCHEM S.A.**
**92800 Puteaux (FR)**

(72) Inventeur: **Malinge, Jean**
**F-64300 Loubieng (FR)**

(56) Documents cités:
**EP-A- 0 439 964**
**EP-A- 0 452 920**
**EP-A- 0 518 092**
**EP-A- 0 563 917**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 673 950 B1

## Description

La présente invention concerne une composante catalytique de polymérisation des oléfines associant plusieurs composantes catalytiques de polymérisation des oléfines, et son procédé d'obtention. La composante catalytique selon l'invention est susceptible d'être obtenue par imprégnation d'un prépolymère avec une solution d'une composante catalytique pour la polymérisation des oléfines. Le prépolymère obtenu par prépolymérisation d'au moins une oléfine en présence de la composante catalytique selon l'invention est également un objet de la présente invention. Le polymère obtenu par polymérisation d'au moins une oléfine en présence du prépolymère selon l'invention ou de la composante catalytique selon l'invention est également un objet de la présente invention.

Par composante catalytique on entend, d'une façon générale et en particulier dans la présente demande, un ingrédient d'un système catalytique de polymérisation des oléfines, ledit ingrédient contenant un métal de transition, ledit métal de transition étant actif pour la polymérisation des oléfines. Le métal de transition est dit actif pour la polymérisation des oléfines lorsque la composante catalytique qui le contient catalyse la polymérisation des oléfines, le cas échéant grâce également à la présence dans le milieux de polymérisation d'autres ingrédients dudit système catalytique. A titre d'exemple, le titane contenu dans une composante catalytique classique de type Ziegler-Natta contenant des atomes de titane, chlore et magnésium, est le métal de transition et est actif pour la polymérisation des oléfines. En effet ce type de composante catalytique catalyse la polymérisation des oléfines, grâce au titane et grâce également à la présence dans le milieux de polymérisation d'un cocatalyseur, généralement un dérivé organique de l'aluminium, autre ingrédient du système catalytique dont la composante catalytique contenant le titane fait partie.

Le terme prépolymérisation est utilisé pour désigner la polymérisation menant à un prépolymère. Par prépolymère, on entend généralement le solide hydrocarboné actif ou polymère obtenu par prépolymérisation d'au moins une oléfine en présence d'une composante catalytique, ce solide représentant au plus dix pour cent de la masse du polymère que l'on souhaite finalement synthétiser par polymérisation d'au moins une oléfine en présence dudit prépolymère. Généralement, la cinétique de la prépolymérisation est contrôlée par contrôle du débit de la ou des oléfines destinées à être prépolymérisées. Généralement, le degré d'avancement de la prépolymérisation est inférieur ou égal à 10 000 grammes de prépolymère par millimole de métal de transition actif contenu dans la composante catalytique dont le prépolymère est issus. Ce degré d'avancement est calculé en prenant en compte la masse totale de polymère contenu dans le prépolymère. Ainsi, si la composante catalytique contient un polymère, le degré d'avancement est calculé en déterminant la somme de la masse de polymère formé pendant la prépolymérisation et de la masse de polymère contenu dans la composante catalytique de départ, puis en divisant cette somme par le nombre de moles de métal de transition contenu dans la composante catalytique de départ. L'usage du terme prépolymère implique nécessairement que le prépolymère considéré est actif pour la polymérisation des oléfines, c'est à dire qu'il catalyse la polymérisation des oléfines, le cas échéant en présence d'un cocatalyseur adapté, lequel peut être de même nature que le cocatalyseur utilisé lors de la polymérisation ayant conduit au prépolymère.

L'association de plusieurs composantes catalytiques de polymérisation des oléfines à déjà été tentée. Le document EP 0 439 964 A2 décrit la préparation de composantes catalytiques solides contenant à la fois une composante à base de Mg, Cl et Ti et un dérivé d'un métal de transition ledit métal ayant pour ligand un groupement cycloalcadiène. Ce type de composante mène à des polymères aux distributions de masses moléculaires élargies.

Le brevet US 5,032,562 décrit la préparation de polyoléfines aux distributions des masses moléculaires multimodales grâce à l'emploi d'une composition catalytique comprenant un dérivé du magnésium comportant des liaisons Mg-OR, un dérivé du zirconium et $TiCl_4$.

La demande de brevet EP 447 070 A1 enseigne qu'une composante catalytique préparée par imprégnation de $MgCl_2$ par deux donneurs d'électrons puis ajout d'un métallocène du zirconium puis ajout de $TiCl_4$ mène, en polymérisation, à un polymère à la distribution des masses moléculaires bimodale.

Le document EP 452 920 enseigne qu'il est possible de réaliser une prépolymérisation en présence d'une composante catalytique contenant à la fois un métal de transition lié à un groupement au squelette cyclopentadiényle non ponté à un autre groupement au squelette cyclopentadiényle et un composé contenant une liaison Al-0, puis de mettre en contact le prépolymère ainsi obtenu avec un dérivé d'un métal de transition comprenant au moins deux ligands comprenant chacun un squelette cyclopentadiényle, les deux ligands étant reliés entre eux par un radical bivalent. La polymérisation des oléfines en présence du produit ainsi obtenu présente une distribution de composition étroite ainsi qu'une bonne tension de fusion.

La demanderesse a découvert que l'association de composantes catalytiques, telle qu'elle est décrite dans l'art antérieur, présente l'inconvénient de ne pas mener aux distributions des masses moléculaires auxquelles on s'attend compte tenu des distributions des masses moléculaires des polymères obtenus par l'usage des composantes catalytiques prises individuellement, c'est à dire non associées. Ainsi, on observe généralement, dans la courbe de distribution des masses moléculaires d'un polymère obtenu par polymérisation en présence d'une composante catalytique associant plusieurs composantes catalytiques différentes directement mises en contact sans prépolymérisation avant cette mise en contact, un pic ou un épaulement par composante catalytique associée, mais, pour un pic donné, l'importance de ce pic n'est pas proportionnelle à la quantité mise en oeuvre de la composante catalytique associée à l'origine du pic, compte tenu de l'activité de celle-ci lorsqu'elle est utilisée individuellement.

La présente invention concerne une composante catalytique pour la polymérisation des oléfines et son procédé d'obtention. Cette composante catalytique est susceptible d'être obtenue par imprégnation, à l'aide d'une solution d'une composante catalytique B, d'un prépolymère A obtenu par prépolymérisation A d'au moins une oléfine en présence d'une composante catalytique A, cette dernière étant solide.

La composante catalytique selon l'invention associe donc une composante catalytique B à la composante catalytique A dont est issu le prépolymère A.

La composante catalytique selon l'invention, également appelée dans ce qui suit composante catalytique AB, mène aux polymères escomptés compte tenu du comportement catalytique individuel de chaque composante catalytique, c'est à dire la composante catalytique A utilisée seule d'une part, et la composante catalytique B utilisée seule d'autre part.

L'invention apporte donc une maîtrise de l'association de différentes composantes catalytiques et procure une amélioration du contrôle de la qualité des polymères fabriqués grâce à l'action catalytique des composantes catalytiques associées.

Un autre avantage de l'invention est de pouvoir contrôler la morphologie et la distribution des tailles de particules des polymères en choisissant la morphologie de la composante catalytique A. La morphologie des particules de polymère est une réplique morphologique des particules de composante catalytique AB, lesquelles sont elles mêmes une réplique morphologique de la composante catalytique A.

Ainsi, à titre d'exemple, si l'on souhaite fabriquer un polymère de forme sensiblement sphérique, il suffira de choisir un prépolymère A de forme sensiblement sphérique, sans que la nature de la composante catalytique B n'influence sensiblement la morphologie du polymère final. La morphologie du prépolymère A étant elle-même sensiblement une réplique de la composante catalytique A, il conviendra, dans l'hypothèse évoquée, de choisir une composante catalytique A de forme sensiblement sphérique.

Les métaux de transition contenus dans les composantes catalytiques dont il est question dans la présente demande, qu'il s'agisse des composantes catalytiques destinées à être associées ou, par voie de conséquence, de la composante catalytique selon l'invention, peuvent être choisis parmi les éléments des groupes 3b, 4b, 5b, 6b, 7b, 8, les lanthanides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium ou le chrome.

Les composantes et prépolymères décrits dans le document EP 452 920 A2 ainsi que les procédés décrits dans ce document pour l'obtention de ces composantes et prépolymères sont exclus du champ de la présente invention.

La composante catalytique selon l'invention est susceptible d'être obtenue par un procédé comprenant,

a - la fabrication d'un prépolymère par prépolymérisation A en présence d'une composante catalytique solide A, puis

b- l'imprégnation dudit prépolymère par une solution d'une composante catalytique B,

la composante A et la composante B n'étant pas telles qu'à la fois

- la composante A comprend un groupement au squelette cyclopentadiényle et un composé contenant une liaison Al-O, et
- la composante B comprend deux ligands comprenant chacun un squelette cyclopentadiényle reliés entre eux par un radical bivalent.

Pour la réalisation de ce procédé, on peut également choisir la composante A et la composante B de façon à ce qu'elles ne soient pas telles qu'à la fois

- la composante A comprend un groupement au squelette cyclopentadiényle et
- la composante B comprend un groupement au squelette cyclopentadiényle.

Pour la réalisation de ce procédé, on peut également choisir la composante A et la composante B de façon à ce qu'elles ne soient pas telles qu'à la fois

- la composante A comprend un groupement au squelette cycloalcadiényle et
- la composante B comprend un groupement au squelette cycloalcadiényle.

Pour la réalisation de ce procédé, la composante A et la composante B peuvent également contenir des métaux

de transition différents.

Le prépolymère A peut être issu de différents types de composante catalytique A.

La composante catalytique A doit être solide. Elle peut être de type Ziegler-Natta. Toute composante catalytique solide commercialisée de type Ziegler-Natta peut convenir. A titre d'exemple, une composante catalytique de type Ziegler-Natta peut se présenter sous la forme d'un complexe contenant au moins Mg, Ti et Cl, le titane se trouvant sous forme chlorée de $Ti^{IV}$ et/ou au moins de $Ti^{III}$ et contenir éventuellement un donneur ou accepteur d'électrons.

Une composante catalytique de type Ziegler-Natta est habituellement le résultat de la combinaison d'au moins un composé du titane, un composé du magnésium, de chlore et éventuellement un composé d'aluminium et/ou au moins un donneur ou accepteur d'électrons ainsi que de tout autre composé utilisable dans ce type de composante.

Le composé du titane est choisi habituellement parmi les composés chlorés du titane de formule $Ti\text{-}(OR)_xCl_{4-x}$ dans laquelle R représente un radical hydrocarboné aliphatique ou aromatique contenant de un à quatorze atomes de carbone, ou représente $COR^1$ avec $R^1$ représentant un radical hydrocarboné aliphatique ou aromatique contenant de un à quatorze atomes de carbone, et x représente un nombre entier allant de 0 à 3.

Le composé du magnésium est habituellement choisi parmi les composés de formule $Mg(OR^2)_nCl_{2-n}$, dans laquelle $R^2$ représente l'hydrogène ou un radical hydrocarboné linéaire ou cyclique et n représente un nombre entier allant de 0 à 2.

Le chlore présent dans la composante de type Ziegler-Natta peut provenir directement de l'halogénure de titane et/ou de l'halogénure de magnésium. Il peut également provenir d'un agent chlorant indépendant tel que l'acide chlorhydrique ou un halogénure organique comme le chlorure de butyle.

Le donneur ou accepteur d'électrons est un composé organique liquide ou solide connu pour entrer dans la composition de ces composantes catalytiques. Le donneur d'électrons peut être un composé mono ou polyfonctionel avantageusement choisi parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle et les silanes tels que les alcoxysilanes aromatiques, alicycliques ou aliphatiques. Conviennent notamment comme donneur d'électrons les composés tels que paratoluate de méthyle, benzoate d'éthyle, acétate d'éthyle ou de butyle, éther éthylique, para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, le phényltriéthoxysilane, le cyclohexylméthyldiméthoxysilane et le dicyclopentyldiméthoxysilane. L'accepteur d'électrons est un acide de Lewis, choisi de préférence parmi le chlorure d'aluminium, le trifluorure de bore, le chloranile ou encore les alkylaluminiums, les halogénoalkylaluminium et alkylmagnésiums.

La composante catalytique A peut être un oxyde de chrome VI déposé sur un support inerte comme la silice.

La composante catalytique A peut être toute composante catalytique solide associant différentes composantes catalytiques.

La composante catalytique A peut être un prépolymère.

La composante catalytique A peut être un prépolymère obtenu par prépolymérisation d'au moins une oléfine en présence d'une composante catalytique selon l'invention.

Le solvant de la solution de la composante catalytique B peut être choisi parmi les solvant non protiques, et de préférence non polaires. Le solvant de ladite solution peut être choisi parmi les hydrocarbures aliphatiques ou alicycliques comme par exemple le cyclohexane, l'hexane ou l'heptane, ou peut être choisi parmi les hydrocarbures aromatiques comme le benzène, le xylene, l'éthylbenzène ou le toluène. Le toluène est un solvant préféré.

La composante catalytique B doit être choisie parmi les composantes catalytiques solubles dans le solvant choisi parmi ceux précités. La composante catalytique B peut être choisie parmi les composés de formule $ML_x$ dans laquelle M représente un métal de transition, L représente un ligand coordiné au métal de transition, x est égal à la valence du métal de transition. Le métal de transition M a autant de ligands L, lesquels peuvent être identiques ou différents, que sa valence. Au moins un ligand L est un groupement au squelette de type cycloalcadiényle, c'est à dire soit le groupement cycloalcadiényle lui-même, soit un groupement cycloalcadiényle substitué, par exemple par un groupement hydrocarboné. Lorsque le composé de formule MLx contient au moins deux groupements au squelette de type cycloalcadiényle, au moins deux de ces groupements peuvent être liés entre eux par un radical bivalent.

Au moins un ligand L peut être choisi parmi les groupements de formule -O-, -S-, $-NR^3-$ ou $-PR^3-$ dont une des valences libres est liée à l'atome de métal de transition M et l'autre valence libre est liée à un radical bivalent, lui-même lié à un ligand L au squellette cycloalcadiényle, dans lesquelles $R^3$ représente l'hydrogène ou un groupement choisi parmi les groupements silyl, alkyl ou aryl ces deux derniers groupements étant éventuellement halogénés.

Au moins un ligand L peut être choisi parmi les groupements de formule $-OR^4$, $-SR^4$, $-NR^4_2$ ou $-PR^4_2$ dont la valence libre est liée à un radical bivalent, lui-même lié à un ligand L au squellette cycloalcadiényle, dans lesquelles $R^4$ représente l'hydrogène ou un groupement choisi parmi les groupements silyl, alkyl ou aryl ces deux derniers groupements étant éventuellement halogénés.

Chaque radical bivalent peut être un radical alkylène comme le radical méthylène ($-CH_2-$), le radical éthylène ($-CH_2CH_2-$) ou triméthylène ($-CH_2CH_2CH_2-$), ce radical alkylène pouvant également être substitué, par exemple par au

moins un groupement hydrocarboné, comme le radical isopropylidène. Ce radical bivalent peut être un groupement silylène ($-SiH_2-$) éventuellement substitué, par exemple par au moins un groupement hydrocarboné comme c'est le cas pour le radical diméthylsilylène ou diphénylsilylène.

De préférence, les ligands L au squelette cycloalcadiényle présentent un squelette cyclopentadiényle, c'est à dire sont des groupements cyclopentadiényles ou sont des groupements cyclopentadiényles substitués comme par exemple le groupement fluorényle ou le groupement indényle.

Les ligands L différents de ceux précédemment cités peuvent être -des groupements hydrocarbonés comportant de 1 à 12 atomes de carbone, des groupements alcoxydes, des halogènes, ou l'hydrogène. Comme groupement hydrocarboné, on peut citer les groupements alkyle, cycloalkyle, aryle, aralkyle, ce qui inclut les groupements méthyle, éthyle, propyle, isopropyle, butyle, cyclopentyle, cyclohexyle, phényle, tolyle, benzyle. Comme groupement alkoxyde, on peut citer les groupements méthoxy, éthoxy, butoxy, phénoxy. Comme halogène, on peut citer le fluor, le chlore, le brome, l'iode.

La composante catalytique B peut être un mélange de plusieurs composés de formule MLx.

A titre d'exemple, la composante catalytique B peut être choisie parmi les composés suivants:

bis(cyclopentadiényl)dichlorozirconium,
éthylènebis(4,5,6,7-tétrahydro-1-indényl)dichlorozirconium,
éthylènebis(indényl)dichlorozirconium,
isopropylydène(cyclopentadiényl, fluorényl)dichlorozirconium,
diméthylsilyl(3-tert-butyl-cyclopentadiényl, fluorényl)dichlorozirconium,
bis(cyclopentadiényl)diméthylzirconium,
éthylènebis(4,5,6,7-tétrahydro-1-indényl)diméthylzirconium,
éthylènebis(indényl)diméthylzirconium,
isopropylydène(cyclopentadiényl, fluorényl)diméthylzirconium,
diméthylsilyl(3-tert-butyl-cyclopentadiényl, fluorényl)diméthylzirconium,
diméthylsilyl(tétraméthylcyclopentadiényl, tert-butyl-amino)dichlorozirconium, ce dernier composé ayant pour formule $(CH_3)_2Si((CH_3)_4C_5, (CH_3)_3CN)ZrCl_2$,
diméthylsilyl(tétraméthylcyclopentadiényl, tert-butyl-amino)diméthyltitane, ce composé ayant pour formule $(CH_3)_2Si((CH_3)_4C_5, (CH_3)_3CN)Ti(CH_3)_2$.

De préférence, la composante catalytique B est choisie parmi les composés de formule MLx dans laquelle M représente le zirconium, le titane ou le hafnium.

L'imprégnation du prépolymère A par la solution de la composante catalytique B peut être réalisée par trempage du prépolymère A dans la solution de la composante catalytique B, de préférence sous agitation. On forme donc une suspension S contenant les particules solides de prépolymère A, le liquide de cette suspension étant constitué de la solution de la composante catalytique B. Il convient de préférence que la composante catalytique B soit en concentration telle dans sa solution que la totalité du prépolymère A trempe dans ladite solution. Généralement, la suspension S contient au moins deux litres de liquide par kg de prépolymère A.

L'imprégnation du prépolymère A par la solution de la composante catalytique B peut également être réalisée par ajout de la solution de la composante catalytique B sur le prépolymère A. Pour que cette imprégnation soit homogène, Il est préférable d'agiter le prépolymère A et d'ajouter lentement la solution de la composante catalytique B pendant cette opération.

Après avoir réalisé l'imprégnation par exemple par l'un des moyens qui viennent d'être décrits, on élimine de préférence le solvant, ce qui peut être réalisé par séchage. Cette opération de séchage peut être réalisée entre 20 et 100°C, de préférence entre 20 et 60°C sous balayage d'un gaz inerte et sec comme l'azote et sous vide partiel ou poussé ou à la pression atmosphérique.

La composante catalytique selon l'invention peut être engagée directement en polymérisation d'au moins une oléfine. Cependant, pour le cas où le contrôle morphologique du polymère final est important, on préfère effectuer une prépolymérisation AB en présence de la composante catalytique selon l'invention, avant la polymérisation. De préférence, cette prépolymérisation AB est effectuée en phase gazeuse.

Le prépolymère AB susceptible d'être obtenu après la prépolymérisation AB est également un objet de la présente invention. On peut pondérer l'influence relative des composantes A et B en jouant sur les quantités de chacune de ces composantes.

Généralement, le degré de prépolymérisation A est compris entre 0,5 et 500 grammes par millimole de métal de transition apporté par la composante catalytique A. En cas de recours à une prépolymérisation AB, le degré d'avancement de la prépolymérisation AB est de préférence compris entre 0,5 et 1000 grammes par millimole de métal de transition apporté par la composante catalytique A et la composante catalytique B.

Des polymères peuvent être obtenus par polymérisation d'au moins une oléfine en présence du prépolymère AB

selon l'invention.

Les oléfines pouvant être utilisées, soit pour les prépolymérisations, soit pour la polymérisation, sont les alpha-oléfines comportant de deux à huit atomes de carbone, tel que l'éthylène ou le propylène, ou leurs mélanges. Les termes polymérisation et prépolymérisation dont il est fait usage dans la présente demande recouvre donc des réactions de copolymérisation. Parmi les mélanges d'alpha-oléfine, on préfère un mélange d'éthylène et d'au moins une alpha-oléfine contenant de trois à huit atomes de carbone, le pourcentage d'éthylène dans le mélange étant généralement supérieur à 90 % en poids.

Les prépolymérisations A et AB peuvent être réalisées par prépolymérisation des oléfines précitées grâce aux procédés de polymérisation en suspension ou en phase gazeuse.

Les polymérisations en présence d'une composante catalytique AB ou en présence d'un prépolymère AB peuvent être réalisées par polymérisation des oléfines précitées grâce aux procédés de polymérisation en masse, en solution, en suspension ou en phase gazeuse, ces deux derniers procédés étant préférés.

Les procédés de polymérisation en masse, en solution, en suspension ou en phase gazeuse sont bien connus dans leur principe de l'homme du métier.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à dix atomes de carbone ou un mélange de ces hydrocarbures. Pour un procédé de polymérisation en suspension, on peut utiliser par exemple le n-heptane, le n-hexane, l'isohexane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant un polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf -5)°C, et sous une pression telle que l'oléfine ou les oléfines soient essentiellement en phase vapeur.

Les procédés de polymérisation en solution, en suspension, en masse, ou en phase gazeuse peuvent faire intervenir un agent de transfert de chaînes, de manière à contrôler l'indice de fusion du prépolymère ou polymère à produire. L'agent de transfert de chaînes préféré est l'hydrogène, que l'on utilise en quantité pouvant aller jusqu'à 90 %, et se situant de préférence entre 0,1 et 60 % du volume de l'ensemble oléfines et hydrogène amené au réacteur.

De préférence, les prépolymérisations A et AB sont réalisées à débit contrôlé de monomère, ledit débit pouvant être compris entre 0,1 et 500 g/h/millimole de métal de transition apporté respectivement par la composante catalytique A et la composante catalytique AB.

Les réactions de prépolymérisation et de polymérisation ont lieu en particulier grâce à la présence de métaux de transition contenus dans les composantes catalytiques ou prépolymères présents lors desdites prépolymérisation et polymérisation.

Suivant la nature des composantes catalytiques et donc des métaux de transition que celles-ci contiennent, il conviendra d'introduire les cocatalyseurs nécessaires aux prépolymérisations ou polymérisations souhaitées. Le rôle de ces cocatalyseurs est bien connu de l'homme du métier. Leur présence dans le milieu de prépolymérisation et/ou de polymérisation peut être nécessaire pour activer les métaux de transition issus des composantes catalytiques utilisées.

D'une façon générale, un prépolymère contient les mêmes métaux de transition que la composante catalytique dont est issu ledit prépolymère après prépolymérisation en présence de ladite composante catalytique. De même, un polymère obtenu sans prépolymérisation, en présence d'une composante catalytique, contient les mêmes métaux de transition que la composante catalytique dont il est issu.

Ainsi, si la présence d'un cocatalyseur a été nécessaire pour activer un métal de transition contenu dans une

composante catalytique lors d'une prépolymérisation, la présence d'un cocatalyseur pouvant être de même nature, sera également nécessaire lors de la polymérisation en présence de ce prépolymère car ce sont les mêmes métaux de transition qu'il convient d'activer à la prépolymérisation et à la polymérisation.

En conséquence:

- lors d'une prépolymérisation A, au moins un cocatalyseur capable d'activer le ou les métaux de transition apportés par la composante catalytique A doit être présent dans le milieu de prépolymérisation A.
- lors d'une prépolymérisation AB, au moins un cocatalyseur capable d'activer le ou les métaux de transition apportés par la composante catalytique A et le ou les métaux de transition apportés par la composante catalytique B doit être présent dans le milieu de prépolymérisation AB.
- lors d'une polymérisation, au moins un cocatalyseur capable d'activer le ou les métaux de transition apportés par la composante catalytique A et le ou les métaux de transition apportés par la composante catalytique B doit être présent dans le milieu de polymérisation.

La présence du ou des cocatalyseurs dans les milieux de prépolymérisation ou polymérisation peut être assurée en ajoutant le ou les cocatalyseurs dans les milieux de prépolymérisation ou polymérisation. Cet ajout peut être réalisé au début de la prépolymérisation ou polymérisation.

La présence du ou des cocatalyseurs dans les milieux de prépolymérisation ou polymérisation peut également être assurée avant prépolymérisation ou polymérisation, par imprégnation de la composante catalytique ou du prépolymère en présence de laquelle ou duquel on souhaite réaliser la prépolymérisation ou polymérisation.

Par ailleurs, il est également possible d'introduire lors de la prépolymérisation AB la quantité de cocatalyseur nécessaire ultérieurement à la polymérisation. Si l'on procède ainsi, le prépolymère AB peut contenir suffisamment de cocatalyseur pour qu'il ne soit plus nécessaire d'introduire de cocatalyseur pendant la polymérisation.

Par ailleurs, il est également possible d'introduire lors de la prépolymérisation A la quantité de cocatalyseur nécessaire ultérieurement à la prépolymérisation AB. Si l'on procède ainsi, le prépolymère A peut contenir suffisamment de cocatalyseur pour qu'il ne soit plus nécessaire d'introduire de cocatalyseur pendant la prépolymérisation AB.

Par ailleurs, il est également possible d'introduire lors de la prépolymérisation A la quantité de cocatalyseur nécessaire ultérieurement à la polymérisation et à l'éventuelle prépolymérisation AB. Si l'on procède ainsi, le prépolymère A peut contenir suffisamment de cocatalyseur pour qu'il ne soit plus nécessaire d'introduire de cocatalyseur pendant la polymérisation et pendant l'éventuelle prépolymérisation AB.

Si l'on utilise comme composante catalytique A une composante catalytique contenant des atomes de magnésium, de chlore et de titane, on utilisera comme cocatalyseur lors de la prépolymérisation A, de l'éventuelle prépolymérisation AB, et de la polymérisation, de préférence un dérivé organique de l'aluminium dans les milieux de prépolymérisation et de polymérisation.

Ce dérivé organique de l'aluminium peut être un dérivé de formule $R^1R^2R^3Al$ dans laquelle $R^1$, $R^2$ et $R^3$ pouvant être identiques ou différents, représentent chacun, soit un atome d'hydrogène, soit un atome d'halogène, soit un groupe alkyl contenant de 1 à 20 atomes de carbone, l'un au moins de $R^1$, $R^2$ ou $R^3$ représentant un groupe alkyl. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un aluminoxane. Cet aluminoxane peut être linéaire, de formule

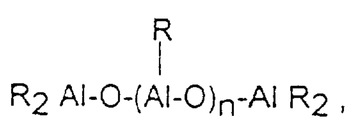

ou cyclique de formule

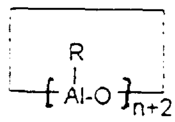

R représentant un radical alkyl comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyl. Par ailleurs, par cocatalyseur, on entend également les mélanges des composés précités.

Pour le cas ou un composé de formule MLx est utilisée comme composante catalytique B, il est préférable d'utiliser au moins un aluminoxane comme cocatalyseur, le cas échéant simultanément avec d'autres cocatalyseurs en particulier lorsque la nature de la composante catalytique A le rend nécessaire, lors de l'éventuelle prépolymérisation AB et de la polymérisation.

Pour le cas ou une composante de formule MLx est utilisée comme composante catalytique B, il est possible d'utiliser comme cocatalyseur de cette composante un composé capable de générer dans les conditions de polymérisation et de l'éventuelle prépolymérisation AB, une espèce cationique dérivée de la composante catalytique B. A titre d'exemple, le N,N-diméthylanilinium,tétra(pentafluorophényl)borate, c'est à dire le $(CH_3)_2(C_6H_5)NH^+,B(C_6F_5)_4^-$ est un cocatalyseur du bis(cyclopentadiényl)diméthylzirconium c'est à dire du $Cp_2Zr(CH_3)_2$ car une espèce cationique de formule $Cp_2ZrCH_3^+,B(C_6F_5)_4^-$ se forme lors de la polymérisation et/ou prépolymérisation.

Si l'on utilise comme composante catalytique A une composante catalytique contenant des atomes de magnésium, de chlore et de titane, et si l'on utilise un composé de formule MLx comme composante catalytique B, il pourra être suffisant d'introduire comme cocatalyseur lors de la prépolymérisation A, de l'éventuelle prépolymérisation AB, et de la polymérisation, un aluminoxane dans les milieux de prépolymérisation et de polymérisation, car ce type de composé est capable d'activer le titane et le métal de transition M.

Les quantités de cocatalyseur utilisées, que ce soit lors d'une prépolymérisation ou de la polymérisation, doivent être suffisantes pour activer le ou les métaux de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

Au moins un donneur d'électrons peut être ajouté aux prépolymérisations ou polymérisations. Ce donneur d'électron peut être par exemple choisi parmi les bases de Lewis, les esters et polyesters d'acides oxygénés, les éthers et polyéthers, les amines, les composés du silicium tels que les silanes et les alkylalkoxysilanes de formule $SiR^1R^2(OR)_2$, $SiR^1(OR)_3$ ou $SiR^1R^2R^3(OR)$, R, $R^1$,$R^2$,$R^3$ pouvant être identiques ou différents, étant des groupements hydrocarbonés contenant de 1 à 12 atomes de carbone, ainsi que parmi les composés du phosphore tels que les phosphates et les phosphonates, les préférés étant les esters ou polyesters alkylés d'acide aromatique, les mono ou diéthers d'alkyle, les alkoxysilanes et les alkylalkoxysilanes.

Dans les exemples qui suivent, les caractéristiques des prépolymères et des polymères synthétisés ont été déterminées par les techniques suivantes:

- Masse moléculaire moyenne en nombre (représentée par Mn) et masse moléculaire moyenne en poids (représentée par Mw) des polymères: les polymères ont été caractérisés par chromatographie d'exclusion stérique à l'aide d'un système analytique à détection réfractométrique similaire à celui décrit dans D. Lecacheux, Journal of Applied Polymer Science, volume 217, 4867 (1982). Les calculs ont été effectués à partir de masses moléculaires issues d'un étalonnage polystyrène et corrigés grâce aux lois de Mark Houwink. La polymolécularité des polymères peut être évaluée par le calcul du rapport Mw/Mn.
- Diamètre moyen des particules de polymère,
  (représenté par D50) :diamètres en-dessous desquels se trouvent 50 % en masse des particules
- Distribution des tailles de particules:
  elles sont évaluées par le calcul d'un paramètre appelé SPAN à l'aide de la formule suivante:

$$SPAN = (D90 - D10)/D50,$$

D90, D50 et D10 représentant les diamètres en-dessous desquels se trouvent respectivement 90 %, 50 % et 10

% en masse des particules. Dans le cas des particules de composante catalytique solide et de prépolymère, D90, D50 et D10 sont déterminés au moyen d'un granulomètre à laser MALVERN 1600.
Dans le cas des particules de polymère, D90, D50 et D10 sont déterminés par tamisage.

- Indices de fluidité: norme ASTM 1238. $MI_2$, $MI_5$ et $MI_{21}$ représentent le poids de polymère écoulé en 10 minutes à travers une filière normalisée à 190°C et sous un poids respectivement de 2,1kg, 5kg, 21kg.

Dans le tableau 1, Ti et Zr représentent respectivement les teneurs en titane et en zirconium des prépolymères AB, exprimées en ppm. Dans le tableau 1, $C_{Zr}$ représente le pourcentage molaire de zirconium contenu dans les prépolymères AB par rapport à la totalité des métaux de transition (titane et zirconium) contenus dans les mêmes prépolymères AB.

Les exemples qui suivent mettent en jeu soit une composante catalytique au zirconium, soit une composante catalytique au titane, soit deux de ces types de composante catalytique. Lorsque ces deux métaux de transition (zirconium et titane) sont simultanément présents lors d'une polymérisation, les polymères obtenus présentent une distribution de masses moléculaires bimodale, le pic des basses masses pouvant être attribué aux composantes catalytiques au zirconium, le pic des hautes masses pouvant être attribué aux composantes catalytiques au titane. Ces attributions sont déduites de l'observation des distributions des masses moléculaires des polymères obtenus avec chacune de ces composantes catalytiques testée individuellement en polymérisation.

L'expression "%BMexp" représente le pourcentage en poids de basses masses moléculaires contenu dans le polymère, étant entendu que lesdites basses masses moléculaires correspondent aux masses moléculaires du pic attribué à l'action du zirconium. Ainsi, lorsque seule une composante catalytique au zirconium a été utilisée, le %BMexp est égal à 100 %. Par contre, lorsqu'une composante catalytique au zirconium et une composante catalytique au titane ont été associées, le %BMexp représente le pourcentage des masses moléculaires correspondant à un seul pic de la distribution bimodal des masses moléculaires, il s'agit du pic du côté des basses masses.

L'expression "%BMth" représente le pourcentage (dit théorique) en poids de basses masses moléculaires calculé à partir de l'observation du comportement catalytique de chacune des composantes catalytiques lorsqu'elles sont utilisées individuellement en prépolymérisation puis polymérisation, ou directement en polymérisation.

Le "%BMth" est destiné à être comparé au "%BMexp" à conditions comparables de polymérisation.

Le %BMth est calculé par la formule suivante :

$$\%BMth = \frac{C_{Zr} \cdot P_{Zr}}{C_{Zr} \cdot P_{Zr} + C_{Ti} \cdot P_{Ti}} \cdot 100$$

dans laquelle

$C_{Zr}$ représente le pourcentage molaire de zirconium contenu dans les prépolymères AB ou composantes catalytiques AB introduits à la polymérisation par rapport à la totalité des métaux de transition (titane et zirconium) contenus dans les mêmes prépolymères ou composantes catalytiques.

$C_{Ti}$ représente le pourcentage molaire de titane contenu dans les prépolymères AB ou composantes catalytiques AB introduits à la polymérisation par rapport à la totalité des métaux de transition (titane et zirconium) contenus dans les mêmes prépolymères ou composantes catalytiques.

$P_{Zr}$ représente la productivité en polymérisation d'un prépolymère ou d'une composante catalytique ne contenant que du zirconium comme métal de transition, ladite productivité étant exprimée en gramme de polymère produit par millimole de zirconium, et

$P_{Ti}$ représente la productivité en polymérisation d'un prépolymère ou d'une composante catalytique ne contenant que du titane comme métal de transition, ladite productivité étant exprimée en gramme de polymère produit par millimole de titane.

Le tableau 1 compare le %BMexp au %BMth par le rapport %BMexp/%BMth.

Les exemples 1 à 5 illustrent l'invention. L'exemple 1 montre en particulier que des particules de prépolymère et de polymère sensiblement sphériques sont obtenues grâce à l'emploi d'une composante catalytique A sensiblement sphérique.

Pour les exemples 2 à 5, les rapports %BMexp/%BMth sont proches de l'unité, ce qui indique que chaque composante catalytique au sein du prépolymère selon l'invention a pu jouer son rôle catalytique attendu.

Les exemples 7 à 11 sont des exemples comparatifs. Les exemples 7 à 9 montrent qu'une forte différence entre le % BMexp et le %BMth est obtenue lorsque deux composantes catalytiques sont associées selon l'art antérieur.

Les exemples 10 et 11 décrivent l'action de chacune des composantes catalytiques prises individuellement.

EXEMPLE 1

Synthèse en suspension d'un prépolymère A puis en phase gaz d'un prépolymère AB

Dans un réacteur double enveloppe de 2,5 litres muni d'une agitation et d'une régulation de température, on introduit sous agitation à 60°C et sous atmosphère d'azote 0,75 litre d'hexane, 0,6 ml d'une solution de méthylaluminoxane dans le toluène commercialisée par la société WITCO ladite solution contenant 4,58 moles d'aluminium par litre de solution, 2,41 g d'une composante catalytique A réalisée comme le catalyseur 2 de l'exemple 1 de la demande de brevet français dont le numéro de dépot est 86FR-004413, ladite composante contenant 2,2 % en poids de titane et 20,6 % en poids de magnésium, étant de morphologie sensiblement sphérique, présentant un D50 de 37µm et un SPAN de 0,48. Le réacteur est pressurisé par 1 bar d'azote, toujours à 60°C, puis il est alimenté par un débit contrôlé d'éthylène pendant une heure de façon à, par une prépolymérisation A, obtenir 120 g d'un prépolymère A. Le degré d'avancement de la prépolymérisation A a donc été de 50 g de prépolymère par gramme de composante catalytique A, c'est à dire 109 g de prépolymère par millimole de titane contenu dans la composante catalytique A.

Après avoir décomprimé le réacteur et éliminé l'hexane par un balayage d'azote, on ajoute au goutte à goutte et en environ 5 minutes au prépolymère A sec, sous azote et sous lente agitation, une solution d'une composante catalytique B consistant en 5 ml d'une solution de $ZrCp_2Cl_2$ et de méthylaluminoxane dans le toluène, ces 5 ml contenant 0,24 g de $ZrCp_2Cl_2$ (ou 0.82 millimoles de $ZrCp_2Cl_2$), Cp représentant un groupe cyclopentadiényle, ces 5 ml contenant également 0,72 ml de la solution précédemment décrite de méthylaluminoxane, de façon à ce que le rapport atomique Al/Zr soit ici sensiblement égal à 4. Le toluène est éliminé par un balayage d'azote à la pression atmosphérique à 60°C. On obtient ainsi une composante catalytique AB imprégnée de méthylaluminoxane. Le réacteur est de nouveau pressurisé par 1 bar d'azote et est alimenté par un débit contrôlé d'éthylène pendant une heure pour réaliser, par prépolymérisation AB à 60°C, 265 g de prépolymère AB. Le degré d'avancement de la prépolymérisation AB est donc de 100 g de prépolymère par gramme de composante catalytique (A et $ZrCp_2Cl_2$), c'est à dire 137 g de prépolymère par millimole de métal de transition (Ti + Zr) contenu dans la composante catalytique AB. Après refroidissement du réacteur, le prépolymère AB est isolé sous atmosphère inerte.

Le prépolymère AB présente une morphologie sensiblement sphérique. Il contient 200 ppm de titane et 282 ppm de zirconium. Le diamètre moyen des particules D50 est voisin de 165 µm. La distribution des tailles de particules est étroite puisque l'on détermine un SPAN de 0,46.

Synthèse en phase gaz d'un polymère

Dans un réacteur double enveloppe sec de 8 litres muni d'une agitation et d'une régulation de température, on introduit sous atmosphère d'azote à 75°C sous une agitation de 400 révolutions par minute, 100 grammes d'une poudre sèche de polyéthylène provenant d'une polymérisation identique à celle présentement décrite, puis 2,1 ml de la solution précédemment décrite de méthylaluminoxane. On pressurise le réacteur par 2 bars d'azote, 6 bars d'hydrogène et 8 bars d'éthylène. On introduit ensuite par l'intermédiaire d'un sas et par poussée à l'azote 8 grammes du prépolymère AB dont la synthèse vient d'être décrite et l'on poursuit l'injection d'azote jusqu'à obtenir une pression de 21 bars dans le réacteur. La pression est maintenue à cette valeur par injection d'éthylène.

Après trois heures de réaction, la polymérisation est arrêtée par arrêt de l'alimentation en éthylène, le réacteur est décomprimé, purgé à l'azote et refroidit. On a ainsi produit 1003 grammes de polymère (cette valeur exclut les 100 grammes de poudre sèche de polyéthylène chargés dans le réacteur avant polymérisation) de morphologie sensiblement sphérique. La productivité a donc été de 17176 g de polyéthylène par millimole de métal de transition (Ti + Zr). Le polymère obtenu présente les caractéristiques suivantes :

- D50 = 715 µm
- Span = 0,22
- Masse volumique apparente = 0,46 g/$cm^3$
- Indice de fluidité = $MI_2$ = 1,1 ; $MI_5/MI_2$ = 3,7
- Mn=1450 g/mole
- Mw=113500 g/mole
- Mw/Mn=78

EXEMPLE 2

Synthèse en suspension d'un prépolymère

Dans un réacteur double enveloppe de 1 litre muni d'une agitation et d'une régulation de température, on introduit

sous agitation à 40°C et sous atmosphère d'azote 0,7 litre de toluène, 3 ml de la solution de méthylaluminoxane dans le toluène décrite à l'exemple 1, 311 mg d'une composante catalytique A réalisée comme la poudre catalytique de l'exemple 1 de la demande de brevet belge dont le numéro de publication est BE-867400, ladite composante contenant 15,4 % en poids de titane et 5,5 % en poids de magnésium. Le réacteur est pressurisé par 1 bar d'azote, toujours à 40°C, puis il est alimenté par un débit contrôlé d'éthylène pendant une heure de façon à obtenir une prépolymérisation A dont le degré est de 50 g de prépolymère par gramme de composante catalytique A, c'est à dire 15,4 grammes de prépolymère par millimole de titane.

Après avoir décomprimé le réacteur, on ajoute sous azote et sous lente agitation 0,5 ml d'une solution dans le toluène contenant 3,5 mg de $ZrCp_2Cl_2$, Cp représentant un groupe cyclopentadiényle, et 0,01 ml de la solution précédemment décrite de méthylaluminoxane de façon à ce que le rapport atomique Al/Zr soit sensiblement égal à 4.

Le réacteur est de nouveau pressurisé par 1 bar d'azote et est alimenté par un débit contrôlé d'éthylène pendant une heure de façon à ce qu'au total, compte tenu de la prépolymérisation A, le degré de prépolymérisation total, c'est à dire le degré de prépolymérisation AB soit de 100 g de polymère par gramme de composante catalytique (A et $ZrCp_2Cl_2$), c'est à dire 31 g de polymère par millimole de métal de transition (Ti + Zr). Après refroidissement du réacteur, le prépolymère AB est isolé sous atmosphère inerte.

<u>Synthèse en suspension d'un polymère</u>

Dans un réacteur double enveloppe de 4 litres, muni d'une agitation et d'une régulation de température, on introduit sous azote à température ambiante, 1,5 litre d'hexane, 2 ml de la solution précédemment décrite de méthylaluminoxane dans le toluène (soit 9,16 millimoles d'aluminium) et 2,4 g du prépolymère AB dont la synthèse vient d'être décrite. Le réacteur est pressurisé par 2 bars d'azote, puis 4 bars d'hydrogène. Après chauffage à 80°C, on introduit de l'éthylène jusqu'à l'obtention d'une pression totale de 13 bars. La pression totale est maintenue constante par addition d'éthylène pendant 3 heures. On arrête alors l'injection d'éthylène et l'on refroidit le réacteur à 25°C. Les métaux de transition contenus dans le polymère sont désactivés par ajout d'une solution de méthanol acide. Le polymère est alors isolé après évaporation des espèces volatiles et séchage. On a ainsi produit 367 grammes de polymère.

Le tableau 1 rassemble les résultats.

<u>EXEMPLE 3</u>

On procède comme pour l'exemple 2, sauf que, pour la synthèse du prépolymère AB, on introduit 292 mg de composante catalytique A et 9,3 mg de $ZrCp_2 Cl_2$ (au lieu des 311 mg de composante catalytique A et 3,5 mg de $ZrCp_2Cl_2$ de l'exemple 2).

La figure 2 donne la distribution des masses moléculaires du polymère obtenu. Les autres résultats sont rassemblés dans le tableau 1.

<u>EXEMPLE 4</u>

On procède comme pour l'exemple 2, sauf que pour la synthèse du prépolymère AB, on introduit 302 mg de composante catalytique A et 19,7 mg de $ZrCp_2Cl_2$ (au lieu des 311 mg de composante catalytique A et 3,5 mg de $ZrCp_2Cl_2$ de l'exemple 2). Les résultats sont rassemblés dans le tableau 1.

<u>EXEMPLE 5</u>

On procède comme pour l'exemple 2, sauf que pour la synthèse du prépolymère AB, on introduit 264 mg de composante catalytique A et 24,2 mg de $ZrCp_2Cl_2$ (au lieu des 311 mg de composante catalytique A et 3,5 mg de $ZrCp_2Cl_2$ de l'exemple 2). Les résultats sont rassemblés dans le tableau 1.

<u>EXEMPLE 6</u> (Comparatif)

<u>Synthèse en suspension d'un prépolymère</u>

Dans un réacteur double enveloppe de 1 litre muni d'une agitation et d'une régulation de température, on introduit sous agitation à 40°C et sous atmosphère d'azote, 0,7 litre de toluène, 3 ml de la solution de méthylaluminoxane dans le toluène décrite à l'exemple 1, 341 mg d'une composante catalytique A réalisée comme la poudre catalytique de l'exemple 1 de la demande de brevet belge dont le numéro de publication est BE-867400, ladite composante contenant 15,4 % en poids de titane et 5,5 % en poids de magnésium, et 0,5 ml d'une solution dans le toluène contenant 3,9 mg de $ZrCp_2Cl_2$, et 0,012 ml de la solution de méthylaluminoxane dans le toluène décrite à l'exemple 1. Le réacteur est

pressurisé par 1 bar d'azote, puis il est alimenté par un débit contrôlé d'éthylène pendant 1 heure de façon à obtenir un degré de prépolymérisation de 100 grammes de prépolymère par gramme de composante catalytique (A + $ZrCp_2Cl_2$), c'est à dire 30,7 g de prépolymère par millimole de métal de transition (Zr + Ti).

Après refroidissement du réacteur, le prépolymère est isolé par filtration et séchage.

Synthèse en suspension d'un polymère

La polymérisation est effectuée de façon analogue à celle de l'exemple 2 mais avec le prépolymère dont la synthèse vient d'être décrite. Les résultats sont rassemblés dans le tableau 1.

EXEMPLE 7 (Comparatif)

On procède comme pour l'exemple 6, sauf que pour la synthèse du prépolymère, on introduit 267 mg de composante catalytique A et 4,1 mg de $ZrCp_2Cl_2$ (au lieu des 341 mg de composante catalytique A et 3,9 mg de $ZrCp_2Cl_2$ de l'exemple 6). Les résultats sont rassemblés dans le tableau 1.

EXEMPLE 8 (Comparatif)

On procède comme pour l'exemple 6, sauf que pour la synthèse du prépolymère, on introduit 315 mg de composante catalytique A et 15,5 mg de $ZrCp_2Cl_2$ (au lieu des 341 mg de composante catalytique A et 3,9 mg de $ZrCp_2Cl_2$ de l'exemple 6). Les résultats sont rassemblés dans le tableau 1.

EXEMPLE 9 (Comparatif)

On procède comme pour l'exemple 6, sauf que pour la synthèse du prépolymère, on introduit 265 mg de composante catalytique A et 24,9 mg de $ZrCp_2Cl_2$ (au lieu des 341 mg de composante catalytique A et 3,9 mg de $ZrCp_2Cl_2$ de l'exemple 6). Les résultats sont rassemblés dans le tableau 1.

EXEMPLE 10 (comparatif)

Synthèse en suspension d'un prépolymère

Dans un réacteur double enveloppe de 1 litre muni d'une agitation et d'une régulation de température, on introduit sous agitation à 40°C et sous atmosphère d'azote, 0,7 litre de toluène, 3 ml de la solution de méthylaluminoxane dans le toluène décrite à l'exemple 1, 310 mg d'une composante catalytique A réalisée comme la poudre catalytique de l'exemple 1 de la demande de brevet belge dont le numéro de publication est BE-867400, ladite composante contenant 15,4 % en poids de titane et 5,5 % en poids de magnésium. Le réacteur est pressurisé par 1 bar d'azote, toujours à 40°C, puis il est alimenté par un débit contrôlé d'éthylène pendant une heure de façon à obtenir une prépolymérisation dont le degré est de 100 g de polymère par gramme de composante catalytique A, c'est à dire 31 g de polymère par millimole de titane.

Après refroidissement du réacteur, le prépolymère est isolé par filtration et séché.

Synthèse en suspension d'un polymère

La polymérisation est effectuée de façon analogue à celle de l'exemple 2, mais avec le prépolymère dont la synthèse vient d'être décrite. La figure 1 donne la distribution des masses moléculaires du polymère obtenu. Les résultats sont rassemblés dans le tableau 1.

EXEMPLE 11 (Comparatif)

Synthèse en suspension d'un prépolymère

Dans un réacteur double enveloppe de 1 litre muni d'une agitation et d'une régulation de température, on introduit sous agitation à 40°C et sous atmosphère d'azote, 0,7 litre de toluène, 3 ml de la solution de méthylaluminoxane dans le toluène décrite à l'exemple 1, 5 ml d'une solution dans le toluène contenant 24 mg de $ZrCp_2Cl_2$ et 0,07 ml de la solution de méthylaluminoxane dans le toluène décrite à l'exemple 1. Le réacteur est pressurisé par 1 bar d'azote, toujours à 40°C, puis il est alimenté par un débit contrôlé d'éthylène pendant une heure de façon à obtenir une prépolymérisation dont le degré est de 1500 grammes de prépolymère par gramme de $ZrCp_2Cl_2$, c'est à dire 438 g de

prépolymère par millimole de zirconium.

Après refroidissement du réacteur, le prépolymère est isolé par filtration et séché.

Synthèse en suspension d'un polymère

La polymérisation est effectuée de façon analogue à celle de l'exemple 2, mais avec le prépolymère dont la synthèse vient d'être décrite. Les résultats sont rassemblés dans le tableau 1.

EXEMPLE 12

Dans un réacteur double enveloppe de 1 litre muni d'une agitation et d'une régulation de température, on introduit sous agitation à 60°C et sous atmosphère d'azote 0,7 litre de toluène, 3 ml de la solution de méthylaluminoxane dans le toluène décrite à l'exemple 1, 1,51 g d'une composante catalytique A réalisée comme la poudre catalytique de l'exemple 1 de la demande de brevet belge dont le numéro de publication est BE-867400, ladite composante contenant 15,4 % en poids de titane et 5,5 % en poids de magnésium. Le réacteur est pressurisé par 1 bar d'azote, toujours à 60°C, puis il est alimenté par un débit contrôlé d'éthylène pendant une heure de façon à obtenir 75 grammes de prépolymère A. Le degré d'avancement de la prépolymérisation A est ici de 50 grammes de prépolymère A par gramme de composante catalytique A, ou 15,5 grammes de prépolymère A par millimole de titane contenu dans la composante catalytique A.

Après avoir décomprimé le réacteur et éliminé le solvant à 60°C sous une pression absolue de 2000 Pascals, on ajoute en cinq minutes sous azote et sous lente agitation une solution dans le toluène de $ZrCp_2Cl_2$ contenant 10 millilitres de toluène et 11 mg de $ZrCp_2Cl_2$, Cp représentant un groupe cyclopentadiényle. Après agitation pendant 15 minutes, le solvant est éliminé sous une pression absolue de 2000 Pascals. On dispose alors d'une composante catalytique AB contenant 3060 ppm de titane et 45 ppm de zirconium, soit $C_{Zr}$=0,76% en mole.

On engage 1,2 grammes de la composante catalytique AB dont la préparation vient d'être décrite dans les conditions de polymérisation de l'exemple 2. On obtient alors 343 grammes de polymère, soit 4450 grammes de polymère par millimole de titane et de zirconium. Le polymère a les caractéristiques suivantes: Mn=7020 g/mole, Mw=156000 g/mole, Mw/Mn=22, %BMexp=9%. La valeur de %BMexp est égale à la valeur de %BMth.

TABLEAU 1

| | ANALYSE DU PREPOLYMERE ENGAGE EN POLYMERISATION | | | ANALYSE DU POLYMERE | | | | | | PRODUCTIVITE (g de polymère par mmole de Ti + Zr) |
|---|---|---|---|---|---|---|---|---|---|---|
| | Ti (ppm) | Zr (ppm) | Czr (% molaire) | Mn (g/mole) | Mw (g/mole) | Mw/Mn | %BMexp | %BMth | %BMexp/%BMth | |
| EXEMPLE 2 | 1 523 | 35 | 1,2 | 5086 | 140900 | 27,7 | 14 | 14 | 1 | 4640 |
| EXEMPLE 3 | 1492 | 97 | 3,3 | 2512 | 124700 | 49,6 | 30 | 31 | 0,97 | 4940 |
| EXEMPLE 4 | 1446 | 191 | 6,5 | 2314 | 168700 | 73 | 43 | 47 | 0,91 | 13410 |
| EXEMPLE 5 | 1411 | 261 | 8,9 | 1552 | 105200 | 68 | 50 | 56 | 0,89 | 15400 |
| EXEMPLE 6 | 1523 | 35 | 1,2 | 7950 | 159000 | 20 | 7 | 14 | 0,50 | 4550 |
| EXEMPLE 7 | 1517 | 47 | 1,6 | 5480 | 143500 | 26 | 12 | 18 | 0,67 | 4400 |
| EXEMPLE 8 | 1468 | 146 | 5 | 2840 | 121800 | 43 | 24 | 41 | 0,59 | 4700 |
| EXEMPLE 9 | 1408 | 267 | 9,1 | 2250 | 121500 | 54 | 32 | 57 | 0,56 | 10700 |
| EXEMPLE 10 | | | 0 | 17830 | 126300 | 7,1 | 0 | 0 | | 4140 |
| EXEMPLE 11 | | | 100 | 790 | 1200 | 1,5 | 100 | 100 | | 54000 |

## Revendications

1. Procédé de fabrication d'une composante catalytique pour la polymérisation des oléfines comprenant:

   a/ la fabrication d'un prépolymère par prépolymérisation A en présence d'une composante catalytique solide A, puis
   b/ l'imprégnation dudit prépolymère par une solution d'une composante catalytique B,

   la composante A et la composante B n'étant pas telles qu'à la fois :

   - la composante A comprend un groupement au squelette cyclopentadiényle et un composé contenant une liaison Al-0, et
   - la composante B comprend deux ligands comprenant chacun un squelette cyclopentadiényle reliés entre eux par un radical bivalent.

2. Procédé selon la revendication 1 caractérisé en ce que la composante A et la composante B ne sont pas telles qu'à la fois:

   - la composante A comprend un groupement au squelette cyclopentadiényle, et
   - la composante B comprend un groupement au squelette cyclopentadiényle.

3. Procédé selon la revendication 1 ou 2 caractérisé en ce que la composante A et la composante B ne sont pas telles qu'à la fois:

   - la composante A comprend un groupement au squelette cycloalcadiényle, et
   - la composante B comprend un groupement au squelette cycloalcadiényle.

4. Procédé selon l'une des revendications 1 à 3 caractérisé en ce que la composante A et la composante B contiennent des métaux de transition différents.

5. Procédé selon l'une des revendications 1 à 4 caractérisé en ce que la composante catalytique solide A contient des atomes de magnésium, de chlore, de titane et en ce que la prépolymérisation A est réalisée en présence d'un cocatalyseur.

6. Procédé selon la revendication 5 caractérisé en ce que la composante catalytique solide A contient au moins un donneur d'électrons.

7. Procédé selon l'une des revendications 1 à 6 caractérisé en ce que la composante catalytique B est choisie parmi les composés de formule MLx dans laquelle M représente un métal de transition, x représente un nombre égal à la valence du métal de transition, L représente un ligand coordinné au métal de transition, au moins un ligand L étant un groupement au squelette de type cycloalcadiényle.

8. Procédé selon la revendication 7 caractérisé en ce que au moins un ligand L est un groupement au squelette de type cyclopentadiényle.

9. Procédé selon l'une des revendications 1 à 8 caractérisé en ce que la composante catalytique B est le bis(cyclopentadiényl)dichlorozirconium.

10. Composante catalytique susceptible d'être obtenu par le procédé de l'une des revendications 1 à 9.

11. Procédé de prépolymérisation d'au moins une oléfine en présence de la composante catalytique de la revendication 10.

12. Procédé selon la revendication 11 caractérisé en ce qu'il est réalisé en phase gaz ou en suspension.

13. Procédé selon la revendication 11 ou 12 caractérisé en ce qu'un aluminoxane est présent dans le milieu de prépolymérisation.

**14.** Prépolymère susceptible d'être obtenu par le procédé de l'une des revendications 11 à 13.

**15.** Procédé de polymérisation d'au moins une oléfine en présence de la composante catalytique de la revendication 10 ou du prépolymère de la revendication 14.

**Claims**

**1.** Process for the manufacture of a catalytic component for the polymerization of olefins comprising:

a - the manufacture of a prepolymer by prepolymerization A in the presence of a solid catalytic component A, then
b - the impregnation of the said prepolymer with a solution of a catalytic component B,

the component A and the component B not being such that at the same time:

- the component A comprises a group with the cyclopentadienyl skeleton and a compound containing an Al-O bond, and
- the component B comprises two ligands each comprising a cyclopentadienyl skeleton connected to each other by a divalent radical.

**2.** Process according to Claim 1, characterized in that the component A and the component B are not such that at the same time:

- the component A comprises a group with the cyclopentadienyl skeleton, and
- the component B comprises a group with the cyclopentadienyl skeleton.

**3.** Process according to Claim 1 or 2, characterized in that the component A and the component B are not such that at the same time:

- the component A comprises a group with the cycloalkadienyl skeleton, and
- the component B comprises a group with the cycloalkadienyl skeleton.

**4.** Process according to one of Claims 1 to 3, characterized in that the component A and the component B contain different transition metals.

**5.** Process according to one of Claims 1 to 4, characterized in that the solid catalytic component A contains magnesium, chlorine and titanium atoms and in that the prepolymerization A is carried out in the presence of a cocatalyst.

**6.** Process according to Claim 5, characterized in that the solid catalytic component A contains at least one electron donor.

**7.** Process according to one of Claims 1 to 6, characterized in that the catalytic component B is chosen from the compounds of formula $ML_x$ in which M represents a transition metal, x represents a number equal to the valency of the transition metal and L represents a ligand coordinated to the transition metal, at least one ligand L being a group with the skeleton of cycloalkadienyl type.

**8.** Process according to Claim 7, characterized in that at least one ligand L is a group with the skeleton of cyclopentadienyl type.

**9.** Process according to one of Claims 1 to 8, characterized in that the catalytic component B is bis(cyclopentadienyl) dichlorozirconium.

**10.** Catalytic component capable of being obtained by the process of one of Claims 1 to 9.

**11.** Process for the prepolymerization of at least one olefin in the presence of the catalytic component of Claim 10.

**12.** Process according to Claim 11, characterized in that it is carried out in the gas phase or in suspension.

**13.** Process according to Claim 11 or 12, characterized in that an aluminoxane is present in the prepolymerization medium.

**14.** Prepolymer capable of being obtained by the process of one of Claims 11 to 13.

**15.** Process for the polymerization of at least one olefin in the presence of the catalytic component of Claim 10 or of the prepolymer of Claim 14.

## Patentansprüche

**1.** Verfahren zur Herstellung einer Katalysatorkomponente zur Polymerisation von Olefinen, umfassend:

a) die Herstellung eines Prepolymers mittels Prepolymerisation A in Gegenwart einer festen Katalysatorkomponente A, dann
b) die Imprägnierung des Prepolymers mit der Lösung einer Katalysatorkomponente B,

wobei die Komponente A und die Komponente B nicht gleichzeitig derart beschaffen sind:

- daß die Komponente A eine Gruppe im Cyclopentadienylgerüst und eine Verbindung, die eine Al-O-Bindung enthält, umfaßt und
- daß die Komponente B zwei Liganden umfaßt, die jeweils ein Cyclopentadienylgerüst umfassen und untereinander über einen zweiwertigen Rest verbunden sind.

**2.** Verfahren nach Anspruch 1, dadurch gekennzeichnet, daß der Bestandteil A und der Bestandteil B nicht gleichzeitig derart beschaffen sind:

- daß der Bestandteil A eine Gruppe im Cyclopentadienylgerüst umfaßt und
- daß der Bestandteil B eine Gruppe im Cyclopentadienylgerüst umfaßt.

**3.** Verfahren nach Anspruch 1 oder 2, dadurch gekennzeichnet, daß der Bestandteil A und der Bestandteil B nicht gleichzeitig derart beschaffen sind:

- daß der Bestandteil A eine Gruppierung im Cycloalkadienylskelett umfaßt und
- daß der Bestandteil B eine Gruppierung im Cycloalkadienylskelett umfaßt.

**4.** Verfahren nach einem der Ansprüche 1 bis 3, dadurch gekennzeichnet, daß die Komponente A und die Komponente B verschiedene Übergangsmetalle enthalten.

**5.** Verfahren nach einem der Ansprüche 1 bis 4, dadurch gekennzeichnet, daß der feste Katalysatorbestandteil A Magnesium-, Chlor- und Titanatome enthält und daß die Prepolymerisation A in Gegenwart eines Cokatalysators durchgeführt wird.

**6.** Verfahren nach Anspruch 5, dadurch gekennzeichnet, daß die feste Katalysatorkomponente A mindestens einen Elektronendonor enthält.

**7.** Verfahren nach einem der Ansprüche 1 bis 6, dadurch gekennzeichnet, daß der Katalysatorbestandteil B ausgewählt ist aus Verbindungen der Formel $ML_x$, in der M ein Übergangsmetall darstellt, x eine der Wertigkeit des Übergangsmetalls entsprechende Zahl darstellt und L einen Liganden darstellt, der mit dem Übergangsmetall koordiniert ist, wobei mindestens ein Ligand L eine Gruppierung im Cycloalkadienylskelett darstellt.

**8.** Verfahren nach Anspruch 7, dadurch gekennzeichnet, daß mindestens ein Ligand L eine Gruppierung im Gerüst vom Cyclopentadienyltyp darstellt.

**9.** Verfahren nach einem der Ansprüche 1 bis 8, dadurch gekennzeichnet, daß der Katalysatorbestandteil B Bis(cyclopentadienyl)dichlorzirkonium ist.

**10.** Katalysatorbestandteil, erhältlich durch ein Verfahren nach einem der Ansprüche 1 bis 9.

11. Verfahren zur Prepolymerisation mindestens eines Olefins in Gegenwart des Katalysatorbestandteils nach Anspruch 10.

12. Verfahren nach Anspruch 11, dadurch gekennzeichnet, daß es in der Gasphase oder in Suspension durchgeführt wircl.

13. Verfahren nach Anspruch 11 oder 12, dadurch gekennzeichnet, daß ein Aluminoxan in dem Prepolymerisationsmilieu vorhanden ist.

14. Prepolymer, erhältlich durch ein Verfahren nach einem der Ansprüche 11 bis 13.

15. Verfahren zur Polymerisation mindestens eines Olefins in Gegenwart einer Katalysatorkomponente nach Anspruch 10 oder des Prepolymers nach Anspruch 14.

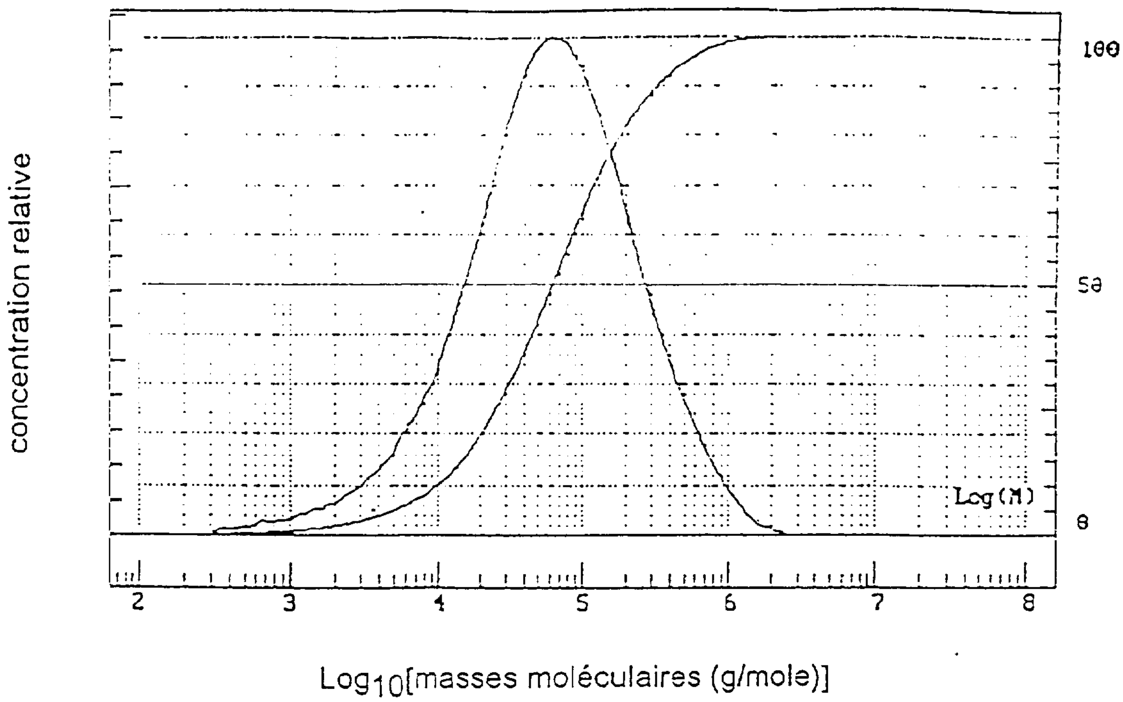


Figure 1

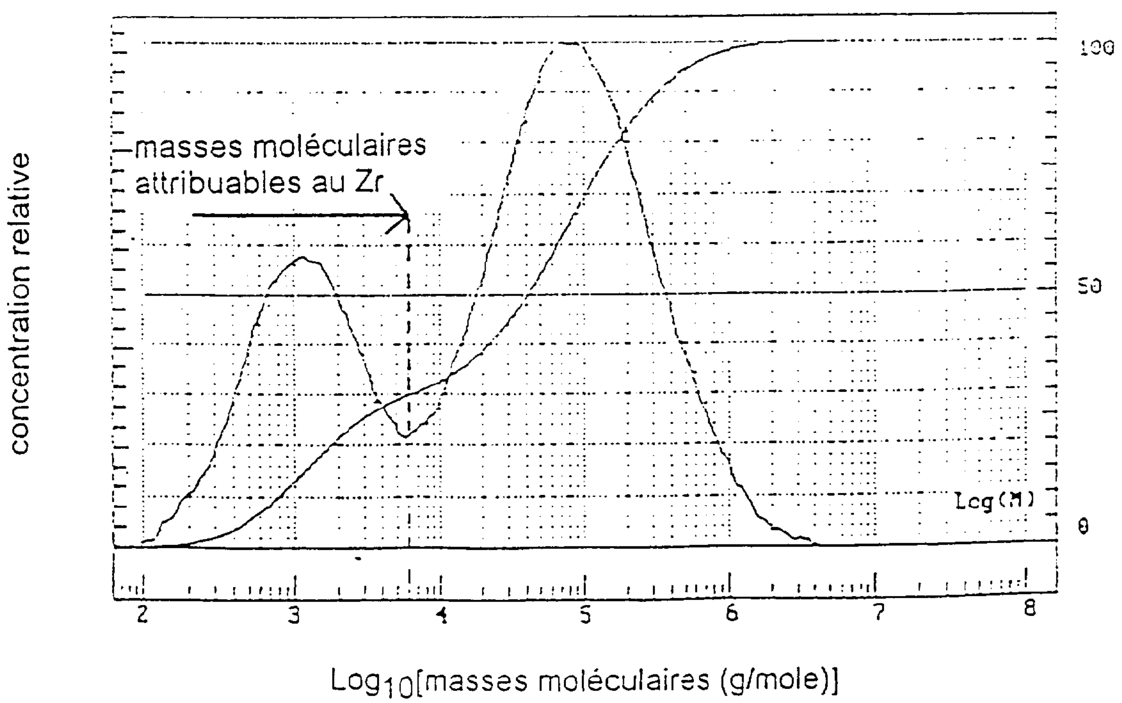


Figure 2